# EUROPEAN PATENT APPLICATION

(11) **EP 4 439 850 A2**
(43) Date of publication of application: **02.10.2024**
(21) Application number: 24164367.5
(22) Date of filing: 19.03.2024
(51) Int. Cl.: H01M 50/516, H01M 50/522, H01M 50/562, H01M 50/566

(54) **BATTERY CELL ASSEMBLY HAVING STRUCTURE THAT MINIMIZES DIFFERENCE IN THERMAL CHARACTERISTICS OF WELDED PORTION**

(30) Priority: 26.03.2023 KR 20230039355; 04.05.2023 KR 20230058489
(71) Applicant: Samsung SDI Co., Ltd., Yongin-si, Gyeonggi-do 17084 (KR)
(72) Inventor: KIM, Jeongho, 17084 Yongin-si (KR); KIM, Jungsoo, 17084 Yongin-si (KR)
(74) Representative: Marks & Clerk LLP

(57) **Abstract**

A battery cell assembly includes a battery cell with a terminal, and a bus bar electrically connected to the battery cell, the bus bar including a connector connected to the terminal of the battery cell, the connector and the terminal being connected to each other through an intermetallic compound (IMC), and a space being defined between the terminal and the connector at opposite sides of the IMC, and a connection portion extending from the connector in a direction oriented away from the terminal.

## Description

### BACKGROUND

### 1. Field

One or more embodiments relate to a welding structure of a battery cell assembly, and more particularly, to a welding structure which minimizes a defect in a welded portion between dissimilar metals.

### 2. Description of the Related Art

Metal welding has been used as an indispensable technology in industries for vehicles, batteries, electronic devices, aerospace engineering, etc. Among welding methods, laser welding that minimizes a thermal influence upon a base material with a high production speed and a small welding region has been used as a technique capable of replacing existing arc welding, resistance welding, etc.

Electronic products produced with current industrial technologies include components having various functions. The components may have different form factors (size, material, structure, etc.). Dissimilar metal bonding (welding) for bonding the components has become an essential technology.

### SUMMARY

According to one or more embodiments, a battery cell assembly having a structure that minimizes a difference in thermal characteristics of a welded portion may include a battery cell and a bus bar including a connector connected to overlap a terminal of the battery cell and a connection portion extending from the connector to deviate from the terminal, in which the terminal and the connector are connected to each other through an intermetallic compound (IMC) therebetween, and a space between the terminal and the connector is formed at opposite sides of the IMC. For the purposes of the present disclosure, an IMC may include a phase comprising two or more 'metals' (including post transition metals or metalloids) forming a different crystal structure than either of the constituent metals.

The bus bar may include a first contact and a second contact formed at opposite sides of the space, the first contact may contact the terminal without the IMC therebetween, and the second contact may contact the terminal with the IMC therebetween.

The space may be formed such that a non-contact portion of the bus bar between the first contact and the second contact forms a step upward from the terminal in a direction away from the first contact and the second contact.

The space may be formed at opposite sides of the IMC, and the first contact and the second contact may include a pair of a first contact and a second contact formed at opposite sides of the space at a side of the IMC and a pair of a first contact and a second contact formed at opposite sides of the space at the other side of the IMC.

The IMC and the space may extend side by side in a first direction.

The first direction may intersect a second direction in which the bus bar extends.

The terminal of the battery cell and the connector of the bus bar may be laser-welded.

The battery cell may include any one of a circular battery cell and a prismatic battery cell.

The terminal of the battery cell may include a steel material, and the bus bar may include an aluminum material.

The terminal of the battery cell may be a steel plate cold deep drawn extra (SPCE).

At least some of the above features that accord with the invention and other features according to the invention are set out in the claims.

### BRIEF DESCRIPTION OF THE DRAWINGS

Features will become apparent to those of skill in the art by describing embodiments with reference to the attached drawings, in which:
FIG. 1 illustrates a state of a terminal of a battery cell and a connector of a bus bar welded to each other, according to example embodiments;
FIG. 2 illustrates a cross-sectional view along line III- III in FIG. 1;
FIG. 3 illustrates a cross-sectional view along line IV-IV in FIG. 1;
FIG. 4 illustrates an image of a cross-section of a welded portion corresponding to FIG. 2;
FIG. 5 illustrates a structure before welding according to example embodiments, which corresponds to FIG. 2; and
FIG. 6 illustrates a comparison table in physical properties between an aluminum bus bar and a steel terminal according to an existing structure and example embodiments.

### DETAILED DESCRIPTION

Example embodiments will now be described hereinafter with reference to the accompanying drawings; however, they may be embodied in different forms and should not be construed as limited to the embodiments set forth herein. Rather, these embodiments are provided to convey examples of implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

When a portion is referred to as "includes" a component, the portion may not exclude another component but may further include another component unless stated otherwise. More specifically, it should be understood that the terms "comprise," "include", "have", or the like used herein is to indicate the presence of features, numbers, steps, operations, components, parts, or a combination thereof described in the specifications, and does not preclude the presence or addition of one or more other features, numbers, steps, operations, components, parts, or a combination thereof. Further, singular forms include plural forms unless apparently indicated otherwise contextually.

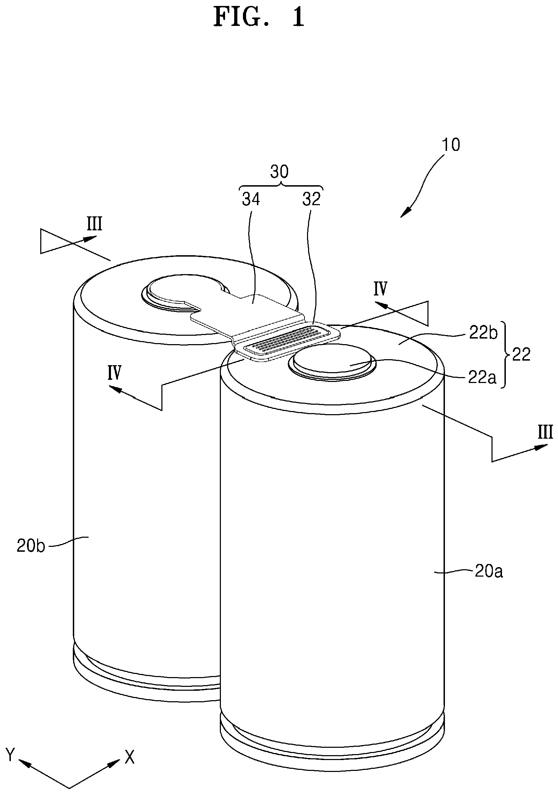

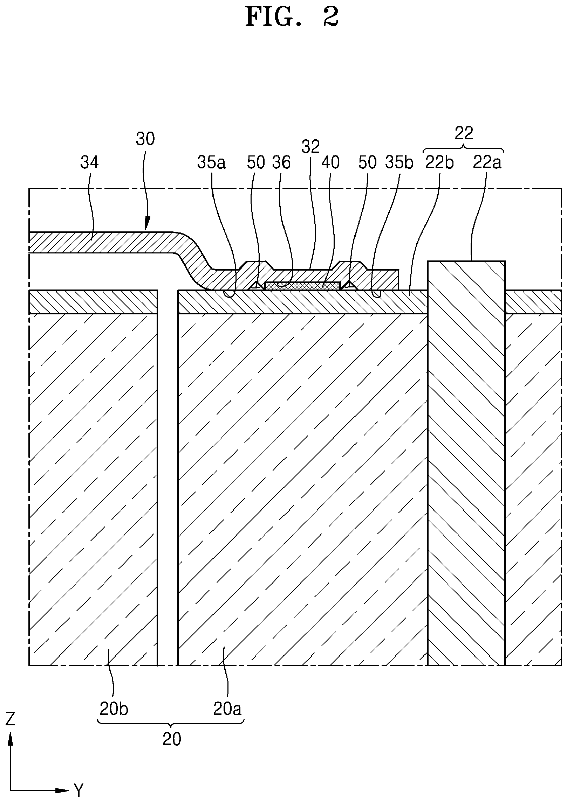

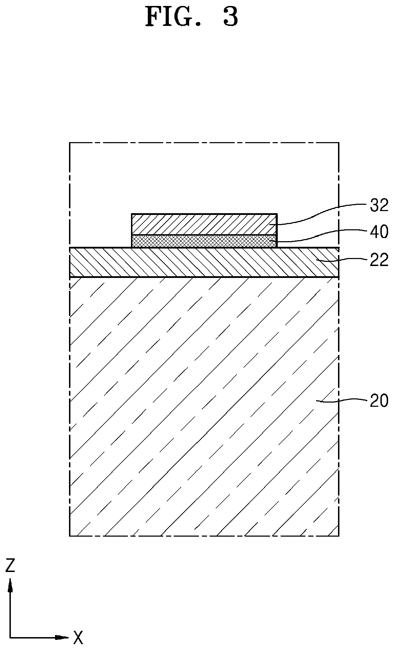

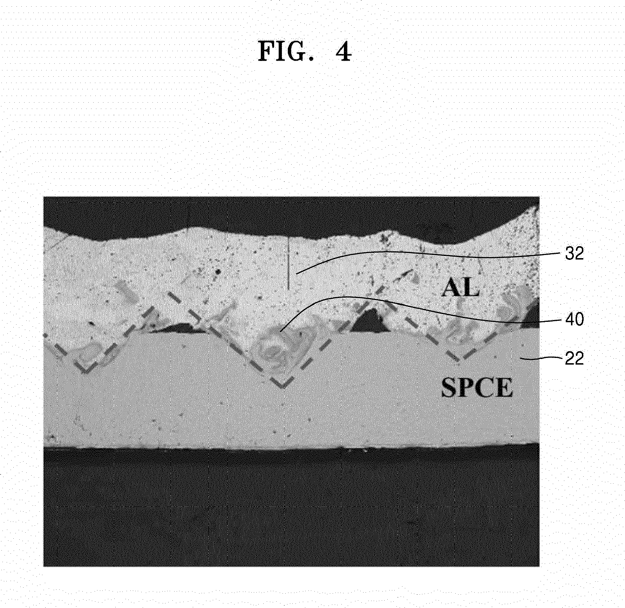

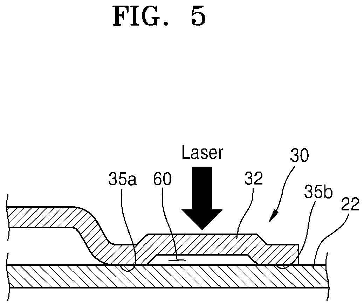

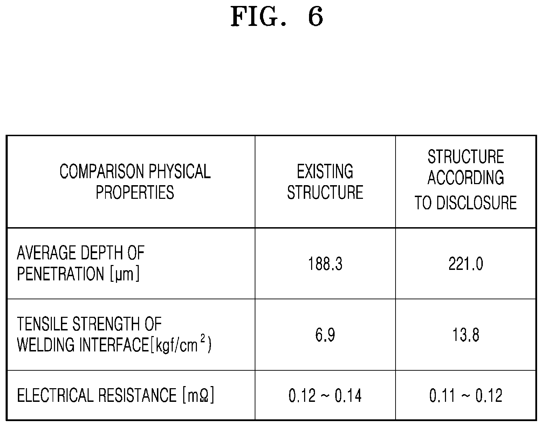

FIG. 1 illustrates a terminal of a battery cell and a connector of a bus bar welded to each other, according to example embodiments. FIG. 2 illustrates a cross-sectional view along line III- III shown in FIG. 1. FIG. 3 illustrates a cross-sectional view along line IV- IV shown in FIG. 1. FIG. 4 illustrates an image of a cross-section of an actual welded portion corresponding to FIG. 2. FIG. 5 illustrates a structure before welding according to example embodiments, which corresponds to FIG. 2. FIG. 6 illustrates a comparison table in physical properties between an aluminum bus bar and a steel terminal according to an existing structure and example embodiments.

Referring to FIG. 1, a battery cell assembly 10 having a structure that minimizes a difference in thermal characteristics of a welded portion according to the present disclosure (hereinafter, referred to as a "battery cell assembly") includes battery cells 20a, 20b and a bus bar 30. The bus bar 30 electrically connects two battery cells 20a, 20b to each other. Only two cells are illustrated in FIG. 1, but the person skilled in the art will appreciate that the battery may include any number of cells.

Each battery cell 20a, 20b may be a secondary battery and each includes a cathode material, an anode material, a separator, and an electrolyte. Each battery cells 20a, 20b includes a terminal 22a, 22b electrically corresponding to each of the cathode material and the anode material on an outer side thereof. The terminal 22a of a cell 20a may be electrically connected to a terminal 22b of an adjacent battery cell 20b by the bus bar 30 when a plurality of battery cells 20a, 20b are connected to each other. When the plurality of battery cells 20a, 20b are serially connected to each other, a positive terminal of the battery cell 20a is electrically connected to a negative terminal of the adjacent battery cell 20b. When the plurality of battery cells 20a, 20b are connected to each other side by side (e.g., in parallel), the positive terminal of the battery cell 20a is electrically connected to a positive terminal of the adjacent battery cell 20b. A negative terminal of the battery cell 20a is electrically connected to the negative terminal of the adjacent battery cell 20b. The battery cells 20a, 20b may include any one of a circular battery cell and a prismatic battery cell.

The bus bar 30 is a member which electrically connects the terminal 22a of any one battery cell 20a and the terminal 22b of another battery cell 20b in the battery cell assembly 10 where the plurality of battery cells 20a, 20b are electrically connected to each other. The bus bar 30 may be formed of a material having good electrical conductivity, e.g., aluminum.

The terminal 22a of the battery cell 20a may be electrically connected to the cathode material or the anode material of the battery cell 20b. The terminal 22 is a point from or to which electrons move in the battery cell 20a, 20b. For example, as illustrated in FIG. 1, the terminal 22a, 22b may include both a flat portion on a top of the battery cell 20a, 20b and a protruding portion that protrudes externally from a center of the flat portion.

The bus bar 30 includes a connector 32 and a connection portion 34. The connection portion 34 and the connector 32 are electrically and physically connected to each other.

The connector 32 is connected to overlap the terminal 22a, 22b of the battery cell 20a, 20b, e.g., the connector 32 may overlap a top surface of the flat portion of the terminal 22. The connector 32 may be connected to electrically communicate with the terminal 22. The connector 32 may be physically coupled to the terminal 22 by, e.g., laser welding.

The connection portion 34 may extend from the connector 32. The connection portion 34 may extend in a direction oriented away from the terminal 22, e.g., the connection portion may extend from the connector 32 on the terminal 22 of one battery cell 20 toward an adjacent battery cell 20.

As illustrated in FIG. 2, a welding structure between the terminal 22 and the connector 32 may be microscopically connected through an intermetallic compound (IMC) 40 between the terminal 22 and the connector 32. Due to a structure of a welded cross-section of the connector 32 and the terminal 22, a space 50 between the terminal 22 and the connector 32 may be formed at opposite sides of the IMC 40. The space 50 may form a structure where the terminal 22 and the connector 32 are separated from each other.

In detail, as illustrated in FIG. 2, the IMC 40 may be directly between a bottom surface of the connector 32 and a top surface of the terminal 22. For example, as illustrated in FIG. 2, a center of the connector 32 may overlap and completely cover a top surface of the IMC 40. For example, peripheral portions of the bus bar 30, i.e., portions of the bus bar 30 not vertically overlapping the IMC 40, may contact (e.g., directly contact) the terminal 22 at a region horizontally spaced apart from the IMC 40.

As further illustrated in FIG. 2, the space 50 between the terminal 22 and the connector 32 may be formed at opposite sides of the IMC 40 in the Y direction. For example, as further illustrated in FIG. 2, the space 50 may laterally separate the IMC 40 from the peripheral portions of the bus bar 30 that contact the terminal 22, e.g., the space 50 may be between a lateral side of the IMC 40 and the peripheral portion of the bus bar 30 that contacts the terminal 22. For example, the space 50 may include an empty space. Portions of the connector 32 vertically overlapping the space 50 may protrude upwardly in the Z direction above a flat upper surface of the connector 32. Formation of the space 50 will be described in more detail below with reference to FIG. 5.

FIG. 5 illustrates a stacked structure of the terminal 22 and the connector 32 before welding. FIG. 5 illustrates an arrangement of connector and terminal, corresponding to that in FIG. 2, but prior to the application of the laser heating.

Referring to FIG. 5, before welding, the connector 32 may form a stand-off structure where the connector 32 and the terminal 22 are separated from each other to have a specific space therebetween in a structure where the connector 32 is welded to the terminal 22. For example, as illustrated in FIG. 5, only peripheral portions of the bus bar 30 may contact (e.g., directly contact) the terminal 22, while a central portion of the connector 32 may curve (e.g., bulge) away from the terminal 22 to define an empty space, 60, between the central portion of the connector 32 and the terminal 22.

In this structure, high energy, e.g., a laser beam, may enter the surface of the connector 32 from above the connector 32, thereby instantaneously dissolving at least a portion of the central portion of the connector 32. The dissolved portion of the connector 32 may collapse to contact (e.g., directly contact) the terminal 22 thereunder. For example, only the center of the bulging part of the connector 32 may be irradiated with the laser beam, so only the irradiated portion may collapse to contact the terminal 22 (with an empty space left between the collapsed portion and the peripheral portion of the bus bar 30).

Since the connector 32 and the terminal 22 are formed of different metals, they have different physical properties. Thus, the dissolved (e.g., melted) portion of the connector 32 that has been heated to high temperature (and collapsed) may include a metal component that contacts and diffuses into the terminal 22 to form a compound between the metal of the connector 32 and the metal of the terminal 22, i.e., the IMC 40 between the connector 32 and the terminal 22.

The IMC 40 is a compound formed between dissimilar metals. The IMC 40 may form a welding interface having high rigidity between the connector 32 and the terminal 22.

However, in general, an IMC may exhibit high brittleness. As a result, when the IMC is generated excessively or diffused broadly, a crack may be generated.

In contrast, according to example embodiments, since only a center of the connector 32 is heated with a laser beam and is collapsed, the space 50 may be formed at opposite sides of the resultant IMC 40 (e.g., FIGS. 2 and 4) to physically separate the connector 32 and the terminal 22 in the vertical direction (e.g., in a region vertically overlapping the space 50). The width of the IMC 40 depends on the width of the incident laser beam and the consequent heat diffusion. This determines a consequent size of the space 50, which may prevent the IMC 40 from being excessively generated. Thus, a rigid welding interface may be formed between the connector 32 and the terminal 22 through the IMC 40, while the space 50 may suppress the IMC 40 from being diffused excessively broadly.

The bus bar 30 may include respective first contacts 35a, 35b, and a second contact 36 formed at opposite sides of the space 50 (e.g., in the Y direction). The first contacts 35a, 35b (e.g., part of the peripheral portion of the bus bar 30) may contact (e.g., directly contact) the terminal 22 without the IMC 40 therebetween. The second contact 36 may contact the terminal 22 with the IMC 40 therebetween. For example, as illustrated in FIG. 2, the second contact 36 may be between two first contacts 35a, 35b.

The space 50 may be formed such that a non-contact portion of the bus bar 30 between the respective first contact 35a, 35b and the second contact 36 forms a step upward from the terminal 22 in a direction oriented away from the first contact 35a, 35b and the second contact 36. That is, a portion of the bus bar vertically overlapping the space 50 may protrude upwardly in the form of a horn between the respective first contact 35a, 35b and the second contact 36.

The space 50 may be formed at opposite sides of the IMC 40 (e.g., in the Y direction). The respective first contact 35a, 35b and the second contact 36 may be formed at opposite sides of the space 50 formed at a side of the IMC 40. The respective first contact 35a, 35b and the second contact 36 may also be formed at opposite sides of the space 50 formed at the other side of the IMC 40. As such, the respective first contacts 35a, 35b and the second contact 36 may be formed at each of the opposite sides of the IMC 40 in the Y direction, to form a pair.

The IMC 40 and the space 50 may extend side by side in a first direction X (e.g., into the page of FIG. 2). In this case, the laser beam may move in the first direction X (e.g., along line IV-IV of FIG. 1) to have the IMC 40 between the terminal 22 and the connector (FIG. 3). The first direction X may intersect (e.g., perpendicularly intersect) a second direction Y in which the bus bar 30 extends.

As described above, the terminal 22 of the battery cell 20 and the connector 32 of the bus bar 30 may be laser-welded. The laser beam may be a pulse-wave laser or a continuous-wave laser.

The terminal 22 of the battery cell 20 may include a steel material. More specifically, the terminal 22 of the battery cell 20 may employ a steel plate cold deep drawn extra (SPCE). The bus bar 30 may include an aluminum material.

Hereinbelow, a process of welding the connector 32 of the bus bar 30 with the terminal 22 of the battery cell 20 in the battery cell assembly 10 having a welding structure including the above-described components will be described.

Referring to FIG. 5, the connector 32 of the bus bar 30 and the terminal 22 of the battery cell 20 may be provided to a physical stand-off structure before welding. Thus, the connector 32 of the bus bar 30 needs to be previously molded not to physically contact the terminal 22 (e.g., to have a structure with a center curving away from the terminal 22). The laser beam may enter from above the connector 32 in a state where the connector 32 and the terminal 22 are separated from each other. A center portion of the connector 32 may be melted and depressed by the laser beam. In an embodiment, the melting is instantaneous. A material of the melted connector 32 may be diffused into the terminal 22 to form the IMC 40 between the connector 32 and the terminal 22.

In detail, the IMC 40 may be partially diffused from side to side, but the degree of heat exposure may be rapidly reduced as the IMC 40 deviates from the center of the laser beam (e.g., along the Y direction). This is because the connector 32 and the terminal 22 are physically separated from each other before welding. That is, in a center portion where the laser beam enters, a firm welding interface may be formed with the terminal 22 through the IMC 40 by melting of the connector 32. However, a separated state between the connector 32 and the terminal 22 may be maintained to some extent at opposite sides of the IMC 40, free of a thermal influence of the laser beam. This portion may form the space 50 after welding. Thus, as explained above, the formation of the IMC determines a consequent size of the space 50, which may suppress the IMC 40 from being formed excessively wide. As a result, generation of a crack due to the IMC 40 having high brittleness may be suppressed. Moreover, as the laser beam is concentrated along the center portion, the depth of penetration of the connector 32 melted into the terminal 22 may increase (e.g., FIG. 4). As a result, the strength of a structure of the welded portion between the connector 32 and the terminal 22 may increase.

FIG. 6 shows a comparison table in physical properties between an aluminum bus bar and a steel terminal according to an existing structure and the example embodiment. Referring to FIG. 6, a physical property of a welding structure according to the present disclosure is further improved than that of an existing structure. For example, the depth of penetration of the connector 32 formed of aluminum may be greater than that of the existing structure. Consequently, it may be seen that a tensile strength is improved. It may also be seen that electrical conductivity is improved along with reduction of electrical resistance.

As such, in a battery cell assembly having applied thereto a structure for minimizing a difference in thermal characteristics of a welded portion according to the disclosure, a connector connected to overlap a terminal of a battery cell may be connected to the terminal through an IMC, at opposite sides of which a space between the terminal and the connector may be formed, such that a rigid welded portion between the terminal and the connector may be formed through the IMC between dissimilar metals and a defect, e.g., a crack, a void, etc., in the welded portion may be significantly reduced due to minimization of a thermal characteristic difference with the IMC. In addition, the space formed at the opposite sides of the IMC may suppress diffusion of the IMC between the terminal and the connector of a portion where the IMC is not formed, thereby reducing occurrence of the defect of the welded portion.

By way of summation and review, welding between different (e.g., dissimilar) metals may result in, e.g., cracks, voids, intermetallic compounds (IMC), etc., on an interface of a welded portion due to a difference in the physical properties between the different metals. The physical properties of different metals may be different from each other in terms of the melting temperature, thermal conductivity, electrical conductivity, etc. Since a welded portion between different metals, when cooled after welding, may cause cracks, voids, IMCs, etc., on an interface thereof due to a potential difference, mechanical and electrical characteristics of the welded portion may deteriorate, and reliability of the battery cell may decline.

For example, laser welding between aluminum and steel is classified as metals with incompatible weldability because the above-described issues occur excessively. Nevertheless, since alternative metals are limited, a technology to overcome this issue is desired.

In contrast, one or more example embodiments include a battery cell assembly in which a defect, e.g., a crack or a void, due to an IMC in a welded portion between dissimilar metals may be prevented or substantially reduced by improving a welding structure to minimize a difference in thermal characteristics of the welded portion between the dissimilar metals.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery cell assembly, comprising:
a battery cell with a terminal; and
a bus bar electrically connected to the battery cell, the bus bar including:
a connector overlapping and connected to the terminal of the battery cell, the connector and the terminal being connected to each other through an intermetallic compound (IMC), wherein a space is defined between the terminal and the connector at opposite sides of the IMC, and
a connection portion extending from the connector in a direction oriented away from the terminal.

2. The battery cell assembly as claimed in claim 1, wherein the bus bar includes a first contact and a second contact at opposite sides of the space, the first contact contacting the terminal without the IMC therebetween, and the second contact contacting the terminal with the IMC therebetween.

3. The battery cell assembly as claimed in claim 2, wherein the bus bar further includes a non-contact portion between the first contact and the second contact, the non-contact portion protruding upwardly from the terminal in a direction oriented away from the first contact and the second contact.

4. The battery cell assembly as claimed in claim 2 or claim 3, wherein the first contact and the second contact are at the opposite sides of the space at each of the opposite sides of the IMC.

5. The battery cell assembly as claimed in any preceding claim, wherein the IMC and the space extend side by side in a first direction.

6. The battery cell assembly as claimed in claim 5, wherein the bus bar extends in a second direction perpendicular to the first direction.

7. The battery cell assembly as claimed in any preceding claim, wherein the terminal of the battery cell and the connector of the bus bar are laser-welded.

8. The battery cell assembly as claimed in any preceding claim, wherein the battery cell includes any one of a circular battery cell and a prismatic battery cell.
